# EUROPEAN PATENT SPECIFICATION

(11) **EP 4 270 606 B1**
(45) Date of publication and mention of the grant of the patent: **05.08.2026**
(21) Application number: 22907960.3
(22) Date of filing: 15.12.2022
(51) Int. Cl.: H01M 10/6569, H01M 10/637, H01M 10/658, H01M 10/613, H01M 10/647, H01M 10/625, H01M 10/6552, H01M 10/6554, H01M 10/6555, H01M 10/6556, H01M 10/6567, H01M 50/209, H01M 50/211

(54) **BATTERY PACK CONFIGURED SUCH THAT HEAT TRANSFER BETWEEN BATTERY CELLS IS BLOCKED**
BATTERIEPACK MIT KONFIGURATION ZUR BLOCKIERUNG DES WÄRMEÜBERGANGS ZWISCHEN BATTERIEZELLEN
BLOC-BATTERIE CONFIGURÉ DE SORTE QUE LE TRANSFERT DE CHALEUR ENTRE DES ÉLÉMENTS DE BATTERIE SOIT BLOQUÉ

(30) Priority: 15.12.2021 KR 20210179442
(43) Date of publication of application: 01.11.2023
(73) Proprietor: LG Energy Solution, Ltd., Seoul 07335 (KR)
(72) Inventor: PARK, Jin Soo, Daejeon 34122 (KR)
(74) Representative: Plasseraud IP
(86) International application number: PCT/KR2022/020447
(87) International publication number: WO 2023/113493

(56) References cited:
- EP-A1- 3 654 445
- WO-A1-2012/172829
- CN-A- 112 290 146
- JP-A- 2011 096 465
- JP-A- 2013 120 827
- JP-A- 2013 178 966
- JP-A- 2021 015 678
- KR-A- 20130 136 157
- US-A1- 2019 181 515

## Description

### [Technical Field]

This application claims the benefit of priority to Korean Patent Application No. 2021-0179442 filed on December 15, 2021.

The present invention relates to a battery pack configured such that heat transfer between battery cells is blocked. More particularly, the present invention relates to a battery pack configured such that heat transfer between battery cells is blocked, wherein the battery pack includes a construction capable of preventing heat conduction to a battery cell adjacent thereto when the temperature of a battery cell rises to a dangerous level or higher.

### [Background Art]

A lithium secondary battery has been used as an energy source for wireless mobile devices, which are small multifunctional products, or wearable devices, which are worn on bodies, and has also been used as an energy source for electric vehicles and hybrid electric vehicles presented as alternatives to existing gasoline and diesel vehicles, which cause air pollution, or an energy storage system (ESS).

As the lithium secondary battery is used as a large-capacity, high-output energy source, as described above, it has become important to secure safety of the lithium secondary battery.

The temperature of the lithium secondary battery increases during charging and discharging thereof, and a high-temperature phenomenon of a battery cell reduces performance of the battery cell. In addition, user safety may become an issue when ignition or explosion occurs due to an increase in temperature of the battery cell. In order to prevent the temperature of the battery cell from increasing to a dangerous temperature, at which the battery cell may ignite and explode, or higher, a heat transfer member made of a material that exhibits high thermal conductivity is provided in a battery pack such that thermal energy of the battery cell is discharged through the heat transfer member.

If battery cells are disposed in tight contact with each other to manufacture a battery pack having high energy density, however, thermal propagation to adjacent battery cells may easily occur instead of thermal energy being discharged through the heat transfer member.

Also, if the heat transfer member functions as a heat transfer path between the battery cells, the speed of thermal propagation between the battery cells may rapidly increase.

When the temperature of a specific battery cell rapidly increases in the state in which a plurality of battery cells is arranged in tight contact with each other, therefore, there is a need for technology capable of preventing heat transfer to the other battery cells.

In connection therewith, Patent Document 1 discloses a battery pack configured to have a structure in which a heat transfer plate is added to an outer surface of a battery cell, a heat conduction member is attached to an inner surface of a housing, and one end of the heat transfer plate is capable of contacting the heat conduction member, wherein the shape of a connector of the heat transfer plate that contacts the heat conduction member is changed depending on the temperature of the battery cell. Specifically, the connector is constituted by metal layers having different coefficients of thermal expansion, and the connector is deformed such that, the connector is further bent when the temperature of the battery cell is low, whereby the distance between the connector and the heat conduction member increases, and the distance between the connector and the heat conduction member decreases when the temperature of the battery cell is high. When the temperature of the battery cell increases, therefore, heat conduction through the heat conduction member may be achieved.

As described above, Patent Document 1 has a construction in which a bent insulation plate is disposed at each battery cell and the insulation plate is constituted by metal layers having different coefficients of thermal expansion, whereby heat from the battery cell is transferred to the heat conduction member.

However, Patent Document 1 does not suggest a structure capable of preventing heat conduction between the battery cells.

In Patent Document 2, a filler is provided between a module case and a battery cell and between a plurality of battery cells, and the filler is configured such that the volume of the filler is increased to prevent swelling of the battery cell when the temperature in a battery module is low, and the volume of the filler is decreased to secure a cooling channel between the module case and the battery cell and between the plurality of battery cells when the temperature in the battery module is high.

The filler of Patent Document 2 is made of a shape-changeable material that is deformable depending on temperature. Therefore, when temperature increases, the filler may contract, whereby the cooling channel may be secured, and therefore the battery cells may be cooled.

In Patent Document 2, however, the expanded filler is disposed between the battery cells, and therefore it is difficult to apply the filler to a battery pack having high energy density.

Therefore, there is a need for technology capable of preventing heat transfer to battery cells adjacent thereto when a thermal runaway phenomenon occurs in a specific battery cell in a battery pack configured such that a plurality of battery cells is arranged in tight contact with each other.

### (Prior Art Documents)

(Patent Document 1) Japanese Patent Application Publication No. 2018-41582 (2018.03.15)
(Patent Document 2) Korean Patent Application Publication No. 2019-0084775 (2019.07.17)

US2019181515A1 discloses a power storage module including a plurality of cooling members configured to discharge heat from a plurality of power storage elements to a heat dissipation member.

### [Disclosure]

### [Technical Problem]

The present invention has been made in view of the above problems, and it is an object of the present invention to provide a battery pack configured such that a deformation member disposed between a plurality of battery cells arranged in tight contact with each other is deformed when the temperature of the battery cell increases, whereby heat transfer between adjacent battery cells is blocked.

### [Technical Solution]

The invention is set out in the appended set of claims. A battery pack according to the present invention to accomplish the above object is defined in claim 1 and includes a battery cell stack including a plurality of battery cells, a cooling member configured to cool the battery cell stack, a deformation member configured to discharge heat from the plurality of battery cells to the cooling member, and a pack case configured to receive the battery cell stack, the cooling member, and the deformation member therein, wherein the deformation member includes a plurality of first deformation members interposed between the plurality of battery cells, and each of the first deformation members includes a coolant therein.

The deformation member further includes a second deformation member disposed between the battery cell stack and the cooling member.

The deformation member may be in a vacuum state in which the remaining part of the deformation member excluding the coolant included therein is an empty space.

The coolant may undergo phase transition and be evaporated by heat from the battery cell and condensed by the cooling member, and heat transfer from the plurality of battery cells to the cooling member may occur through the phase transition of the coolant.

When temperature of the deformation member reaches a boiling point of the coolant or higher, the deformation member is deformed such that the volume of the deformation member expands, and when the entirety of the coolant transitions into a gaseous phase, heat transfer from the plurality of battery cells to the cooling member is blocked.

A case of the deformation member may be made of a shape-memory alloy.

The coolant may undergo a phase transition between evaporation and condensation depending on the temperature of the battery cell.

The case may include a first surface and a second surface each configured to face the battery cell or the cooling member, each of the first surface and the second surface may be flat at a temperature lower than a deformation temperature of the shape memory alloy, and each of the first surface and the second surface may be deformed into a curved shape at a temperature higher than the deformation temperature.

Heat transfer from the plurality of battery cells to the cooling member may be blocked when the entirety of the coolant in the deformation member is evaporated into a gaseous state as a result of each of the first surface and the second surface being expanded and deformed into a curved shape, .

The first deformation member or a thermal insulation member may be disposed between the plurality of battery cells.

The thermal insulation member may include an elastic material.

The deformation member may be configured to have a flat shape.

The coolant may be selected from the group consisting of ethanol, methanol, and water.

The present invention provides a device including the battery pack as an energy source.

In addition, the present invention may provide various combinations of the above solving means.

### [Advantageous Effects]

As is apparent from the above description, a battery pack according to the present invention includes a deformation member configured to discharge heat from a plurality of battery cells to a cooling member, whereby it is possible to prevent a rapid increase in temperature of the battery cells.

In addition, thermal conductivity of the deformation member is remarkably reduced when the temperature of each of the battery cells increases to a dangerous level, whereby it is possible to block heat transfer between the battery cells.

### [Description of Drawings]

FIG. 1 is a perspective view of a battery pack according to the present invention.
FIG. 2 is a partial perspective view of a battery pack according to a first embodiment.
FIG. 3 is a sectional view along line A-A' of FIG. 2.
FIG. 4 is a vertical sectional view of a deformation member before and after deformation.
FIG. 5 is a partial perspective view of a battery pack according to a second embodiment.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

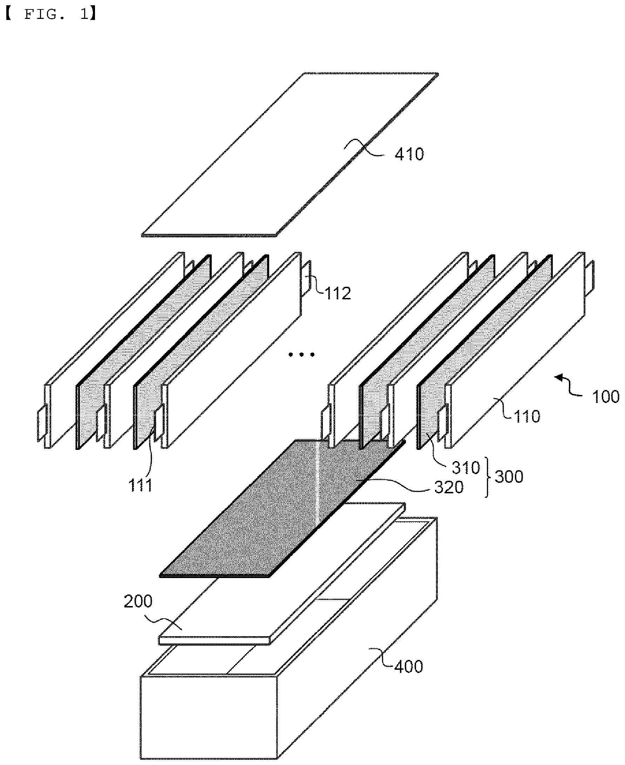

FIG. 1 is a perspective view of a battery pack according to the present invention.

Referring to FIG. 1, the battery pack according to the present invention includes a battery cell stack 100 including a plurality of battery cells 110, a cooling member 200 configured to cool the battery cell stack 100, a deformation member 300 configured to discharge heat from the plurality of battery cells 110 to the cooling member 200, and a pack case 400 configured to receive the battery cell stack 100, the cooling member 200, and the deformation member 300 therein, wherein the deformation member 300 includes a first deformation member 310 interposed between one battery cell 110 and another battery cell 110.

In addition, the deformation member 300 includes a second deformation member 320 disposed between the battery cell stack 100 and the cooling member 200.

The deformation member 300 includes a coolant therein, and a case configured to receive the coolant is made of a material that exhibits excellent thermal conductivity. Consequently, cooling of the battery cells and heat transfer between the battery cells are achieved through the deformation member 300; temperature deviation between the battery cells may be prevented through the first deformation member 310, and heat generated from the battery cells 110 may be discharged to the cooling member 200 through the second deformation member 320.

Specifically, the cooling member 200 configured to cool the battery cells 110 is disposed under the battery cell stack 100 including the plurality of battery cells 110, and the second deformation member 320 is disposed between the battery cell stack 100 and the cooling member 200. Consequently, heat from the battery cell stack 100 may be discharged to the cooling member 200 through the second deformation member 320, whereby it is possible to maintain the temperatures of the battery cells 110 within a predetermined range.

The battery cell stack 100, the deformation member 300, and the cooling member 200 may be received in the pack case 400, an upper open surface of the pack case 400 may be covered with a top plate 410, and the pack case 400 may be hermetically sealed, whereby the battery pack may be assembled.

Unlike what is shown in FIG. 1, however, the pack case 400 may be formed in the shape of a mono frame configured such that end plates are assembled in directions in which electrode terminals protrude or a U-frame, and a method of hermetically sealing the battery pack may be changed depending on the shape of the pack case.

The cooling member 200 may be configured such that the coolant flows in the case, and the cooling member 200 may be provided with an inlet and an outlet, through which the coolant is introduced and discharged, respectively. The coolant may be supplied from the outside of the pack case 400, and the coolant may be discharged to the outside of the pack case 400.

The battery cell may be a pouch-shaped battery cell configured such that an electrode assembly is received in a pouch-shaped battery case made of a laminate sheet including a metal layer and a resin layer, a prismatic battery cell configured such that an electrode assembly is received in a prismatic metal can, or a cylindrical battery cell configured such that an electrode assembly is received in a cylindrical metal can.

In addition, FIG. 1 shows a bidirectional pouch-shaped battery cell configured such that a positive electrode lead 111 and a negative electrode lead 112 protrude in opposite directions. Unlike this, however, a unidirectional pouch-shaped battery cell configured such that the positive electrode lead 111 and the negative electrode lead 112 protrude in the same direction may be used.

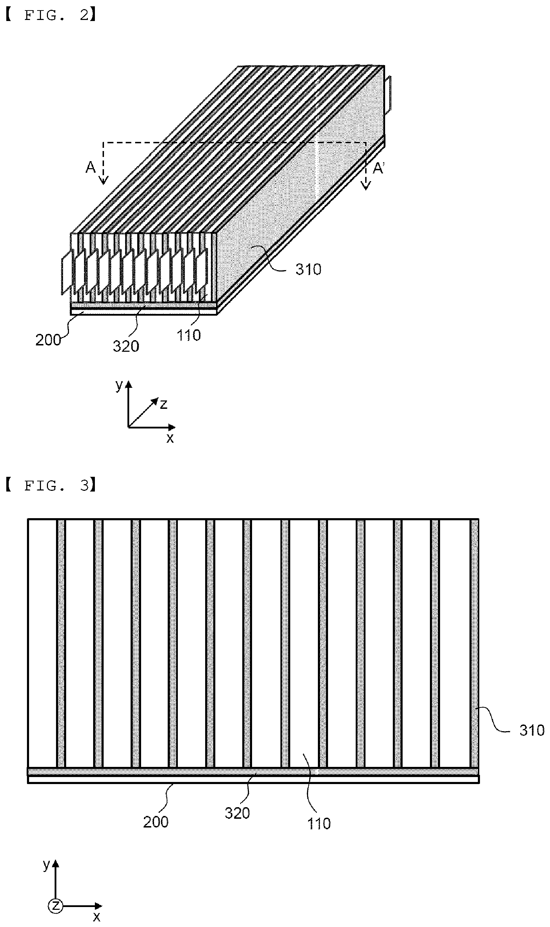

FIG. 2 is a partial perspective view of a battery pack according to a first embodiment, and FIG. 3 is a sectional view along line A-A' of FIG. 2.

Referring to FIGS. 2 and 3, the state in which the pack case is omitted from FIG. 1 is shown.

Each of the first deformation member 310 and the second deformation member 320 is formed in a flat shape.

The y-axis direction length and the z-axis direction length of the first deformation member 310 may be greater than or equal to the y-axis direction length and the z-axis direction length of each of the battery cells 110 corresponding thereto, respectively. Consequently, the contact surface between the battery cells 110 and the first deformation member 310 may be maximized, and therefore quick heat transfer may be achieved.

The x-axis direction length and the z-axis direction length of the second deformation member 320 on which the battery cell stack is disposed may be greater than or equal to the x-axis direction length and the z-axis direction length of a structure in which the battery cells 110 and the second deformation member 320 are disposed in tight contact with each other, respectively. Consequently, the second deformation member 320 has a large heat transfer area between the battery cells 110 and the first deformation member 310 and the cooling member 200.

In a concrete example, on the assumption that the temperature at which a thermal runaway phenomenon may occur due to heat generated from a battery cell is about 150°C, the state in which the temperature of the battery cell is lower than 150°C may be referred to as a safe temperature range, and the state in which the temperature of the battery cell is equal to or higher than 150°C may be referred to as a dangerous temperature range. The first deformation member 310 and the second deformation member 320 remain flat and the contact area with the battery cells may be maximized within the safe temperature range, whereby the battery cells may be smoothly cooled, and therefore overheating may be prevented.

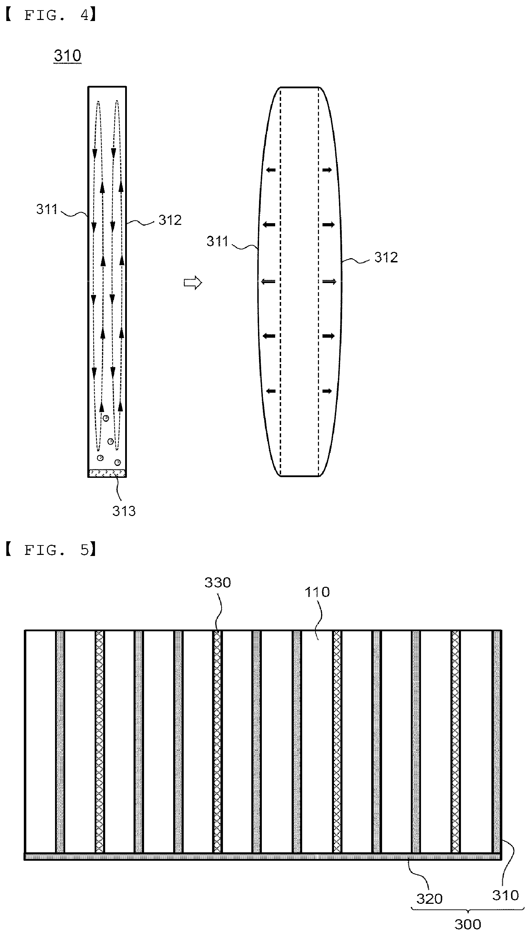

FIG. 4 is a vertical sectional view of the deformation member before and after deformation.

FIG. 4 is a vertical sectional view of the first deformation member 310 constituting the deformation member, and the following description of the first deformation member will be equally applied to the second deformation member.

The first deformation member 310 includes a coolant 313 therein, and may be in a vacuum state in which the remaining part of the first deformation member excluding the coolant 313 is an empty space. In the vacuum-state space, the coolant 313 may be evaporated and condensed depending on the temperature of the battery cell. Specifically, phase transition of the coolant occurs, in which the coolant is evaporated by heat from the battery cell and the coolant is condensed by the cooling member 200. As a result of such phase transition of the coolant, heat from the plurality of battery cells 110 may be transferred to the cooling member 200 through the first deformation member 310 and the second deformation member 320.

In FIG. 4, a lower part of the first deformation member 310 having the coolant is disposed to contact the second deformation member 320, and the second deformation member 320 is disposed to contact the cooling member. As a result, the temperature of the second deformation member 320 is lower than the temperature of the first deformation member 310.

Consequently, a process in which the coolant is condensed in a lower part of the interior of the first deformation member 310, the temperature of which is relatively low due to contact with the second deformation member, and the coolant is evaporated in an upper part of the interior of the first deformation member 310, the temperature of which is relatively high, may be performed.

For example, each of the first deformation member and the second deformation member may be a heat pipe, and any of known heat pipes may be used as the deformation member according to the present invention irrespective of the kind thereof.

In a concrete example, the first deformation member 310 is made of a material that is changeable in shape. When the temperature of the battery cell reaches 150°C or higher, thus falling within the dangerous temperature range, the first deformation member 310 may be deformed such that the volume of the first deformation member is expanded, as shown in FIG. 4.

That is, when the temperature of the battery cell reaches the boiling point of the coolant 313 or higher, the first deformation member 310 may be deformed such that the volume of the first deformation member is expanded, and when the entirety of the coolant 313 transitions into the gaseous phase, heat transfer from the plurality of battery cells to the cooling member may be blocked.

When the volume of the first deformation member 310 is expanded, as described above, the entirety of the coolant transitions into the gaseous phase due to adiabatic expansion, whereby thermal conductivity is rapidly reduced, and therefore heat exchange between the battery cells and heat exchange between the battery cells and the cooling member may be blocked.

In addition, the contact area with the battery cells is reduced due to volumetric expansion of the first deformation member 310, whereby heat exchange between the battery cells may be further reduced.

In a volumetric expansion method of the deformation member, a case made of a material that is deformed while being triggered at a specific temperature or higher may be used. Alternatively, a method of connecting a pressurization means, such as a cylinder, to a deformation member made of a material that is expandable and contractible by pressure and applying pressure to the deformation member to expand the volume of the deformation member may be used.

In a concrete example, the case of the deformation member may be made of a shape-memory alloy, and the coolant, phase transition of which is performed such that the coolant is evaporated and condensed depending on the temperature of the battery cell, may be included in the deformation member.

The case includes a first surface 311 and a second surface 312, each of which is formed in the shape of a wide rectangle, configured to face the battery cell or the cooling member. Each of the first surface 311 and the second surface 312 is flat at a temperature lower than the deformation temperature of the shape-memory alloy, and each of the first surface 311 and the second surface 312 is deformed into a curved shape at a temperature higher than the deformation temperature of the shape-memory alloy.

When the entirety of the coolant in the deformation member is evaporated into the gaseous phase as the result of each of the first surface 311 and the second surface 312 being expanded and deformed into a curved shape, as described above, heat transfer between the plurality of battery cells and heat transfer from the plurality of battery cells to the cooling member may be blocked.

The coolant 313 may be selected in consideration of the temperature necessary for expansion deformation. For example, the coolant may be selected from the group consisting of methanol, ethanol, and water.

In the first deformation member 310, the same phase transition as in the second deformation member 320 may also occur in an upward-downward direction.

FIG. 5 is a partial perspective view of a battery pack according to a second embodiment.

Referring to FIG. 5, the state in which a pack case and a cooling member are omitted from the battery pack according to the present invention is shown.

A second deformation member 320 is disposed under the plurality of battery cells 110, and a first deformation member 310 or a thermal insulation member 330 is disposed between the plurality of battery cells 110.

That is, any one of the first deformation member 310 and the thermal insulation member 330 is disposed between one battery cell 110 and another battery cell 110, and each of the battery cells contacts the first deformation member 310 on at least one outer surface thereof.

Consequently, it is possible to block heat exchange between neighboring battery cells through the thermal insulation member 330 and to discharge heat from the battery cells to the outside through the deformation members.

Meanwhile, each of the first deformation member and the second deformation member according to the present invention may be made of a material having a volume that is expandable when the temperature of the battery cell increases, and therefore the external shape of a battery cell stack including the battery cells may be enlarged when the volume of each of the deformation members increases. However, it is preferable for the volume of the battery cell stack not to exceed a predetermined space provided in the battery pack, and therefore a thermal insulation member made of an elastic material may be disposed as the thermal insulation member 330 to reduce an increase in volume of the deformation member.

In addition, the description of the first deformation member and the second deformation member described with reference to FIGS. 2 to 4 may be equally applied to the first deformation member and the second deformation member shown in FIG. 5.

The present invention may provide a device including the battery pack according to the present invention as an energy source. For example, the device may be an electric vehicle, a hybrid electric vehicle, a plug-in hybrid electric vehicle, an energy storage system (ESS), an electric cart, or an electric two-wheel vehicle.

Even though the battery pack according to the present invention is applied to a device that requires high capacity and high output, as described above, it is possible to prevent a rapid increase in temperature of the battery cell and to block heat conduction between the battery cells, and therefore it is possible to provide a battery pack with improved safety.

### (Description of Reference Numerals)

100: Battery cell stack
110: Battery cell
111: Positive electrode lead
112: Negative electrode lead
200: Cooling member
300: Deformation member
310: First deformation member
320: Second deformation member
311: First surface
312: Second surface
313: Coolant
330: Thermal insulation member
400: Pack case
410: Top plate

## Claims

1. A battery pack comprising:
a battery cell stack (100) comprising a plurality of battery cells (110);
a cooling member (200) configured to cool the battery cell stack;
a deformation member (300) configured to discharge heat from the plurality of battery cells to the cooling member; and
a pack case (400) configured to receive the battery cell stack, the cooling member, and the deformation member therein,
wherein the deformation member comprises a plurality of first deformation members (310) interposed between the plurality of battery cells, and
wherein the deformation member comprises a second deformation member (320) disposed between the battery cell stack and the cooling member,
wherein each of the plurality of the first deformation members comprises a coolant (313) therein, the coolant being configured to be condensed in a lower part of the interior of the first deformation member due to contact with the second deformation member and being configured to be evaporated in an upper part of the interior of the first deformation member,
wherein, when temperature of the deformation member reaches a boiling point of the coolant or higher, the deformation member is deformed such that a volume of the deformation member expands, and
wherein, when the entirety of the coolant transitions into a gaseous phase, heat transfer from the plurality of battery cells to the cooling member is blocked.

2. The battery pack according to claim 1, wherein the deformation member is in a vacuum state in which a remaining part of the deformation member excluding the coolant included therein is an empty space.

3. The battery pack according to claim 1, wherein:
the coolant undergoes phase transition and is evaporated by heat from the battery cell and condensed by the cooling member, and
heat transfer from the plurality of battery cells to the cooling member occurs through the phase transition of the coolant.

4. The battery pack according to claim 1, wherein a case of the deformation member is made of a shape-memory alloy.

5. The battery pack according to claim 1, wherein the coolant undergoes a phase transition between evaporation and condensation depending on temperature of each of the plurality of battery cells.

6. The battery pack according to claim 4, wherein:
the case comprises a first surface (311) and a second surface (312) each configured to face the battery cell or the cooling member,
each of the first surface and the second surface is flat at a temperature lower than a deformation temperature of the shape memory alloy, and
each of the first surface and the second surface is deformed into a curved shape at a temperature higher than the deformation temperature.

7. The battery pack according to claim 6, wherein, heat transfer from the plurality of battery cells to the cooling member is blocked when an entirety of the coolant in the deformation member is evaporated into a gaseous state as a result of each of the first surface and the second surface being expanded and deformed into the curved shape.

8. The battery pack according to claim 1, wherein the first deformation member or a thermal insulation member (330) is disposed between the plurality of battery cells.

9. The battery pack according to claim 8, wherein the thermal insulation member comprises an elastic material.

10. The battery pack according to claim 1, wherein the deformation member is configured to have a flat shape.

11. The battery pack according to claim 1, wherein the coolant is selected from a group consisting of ethanol, methanol, and water.

12. A device comprising the battery pack according to any one of claims 1 to 11 as an energy source.

## Patentansprüche

1. Batteriepack, umfassend:
einen Batteriezellenstapel (100), der eine Vielzahl von Batteriezellen (110) umfasst;
ein Kühlelement (200), das konfiguriert ist, um den Batteriezellenstapel zu kühlen;
ein Verformungselement (300), das konfiguriert ist, um Wärme von der Vielzahl von Batteriezellen an das Kühlelement abzuführen;
und
ein Packgehäuse (400), das konfiguriert ist, um den Batteriezellenstapel, das Kühlelement und das Verformungselement darin aufzunehmen,
wobei das Verformungselement eine Vielzahl von ersten Verformungselementen (310) umfasst, die zwischen der Vielzahl von Batteriezellen angeordnet sind, und
wobei das Verformungselement ein zweites Verformungselement (320) umfasst, das zwischen dem Batteriezellenstapel und dem Kühlelement angeordnet ist,
wobei jedes aus der Vielzahl der ersten Verformungselemente ein Kühlmittel (313) darin umfasst, wobei das Kühlmittel konfiguriert ist, um in einem unteren Teil des Inneren des ersten Verformungselements aufgrund des Kontakts mit dem zweiten Verformungselement kondensiert zu werden, und konfiguriert ist, um in einem oberen Teil des Inneren des ersten Verformungselements verdampft zu werden,
wobei, wenn die Temperatur des Verformungselements einen Siedepunkt des Kühlmittels oder höher erreicht, das Verformungselement so verformt wird, dass ein Volumen des Verformungselements expandiert, und
wobei, wenn die Gesamtheit des Kühlmittels in eine gasförmige Phase übergeht, die Wärmeübertragung von der Vielzahl von Batteriezellen zum Kühlelement blockiert wird.

2. Batteriepack nach Anspruch 1, wobei sich das Verformungselement in einem Vakuumzustand befindet, in dem ein verbleibender Teil des Verformungselements, ausschließlich des darin enthaltenen Kühlmittels, ein leerer Raum ist.

3. Batteriepack nach Anspruch 1, wobei:
das Kühlmittel einen Phasenübergang durchläuft und durch Wärme von der Batteriezelle verdampft und durch das Kühlelement kondensiert wird, und
die Wärmeübertragung von der Vielzahl von Batteriezellen zum Kühlelement durch den Phasenübergang des Kühlmittels erfolgt.

4. Batteriepack nach Anspruch 1, wobei ein Gehäuse des Verformungselements aus einer Formgedächtnislegierung hergestellt ist.

5. Batteriepack nach Anspruch 1, wobei das Kühlmittel einen Phasenübergang zwischen Verdampfung und Kondensation in Abhängigkeit von der Temperatur jeder der Vielzahl von Batteriezellen durchläuft.

6. Batteriepack nach Anspruch 4, wobei:
das Gehäuse eine erste Oberfläche (311) und eine zweite Oberfläche (312) umfasst, die jeweils konfiguriert sind, um der Batteriezelle oder dem Kühlelement zugewandt zu sein,
jede der ersten Oberfläche und der zweiten Oberfläche bei einer Temperatur, die niedriger als eine Verformungstemperatur der Formgedächtnislegierung ist, flach ist, und
jede der ersten Oberfläche und der zweiten Oberfläche bei einer Temperatur, die höher als die Verformungstemperatur ist, in eine gekrümmte Form verformt wird.

7. Batteriepack nach Anspruch 6, wobei die Wärmeübertragung von der Vielzahl von Batteriezellen zum Kühlelement blockiert wird, wenn eine Gesamtheit des Kühlmittels im Verformungselement als Ergebnis davon, dass jede der ersten Oberfläche und der zweiten Oberfläche expandiert und in die gekrümmte Form verformt wird, in einen gasförmigen Zustand verdampft wird.

8. Batteriepack nach Anspruch 1, wobei das erste Verformungselement oder ein Wärmeisolationselement (330) zwischen der Vielzahl von Batteriezellen angeordnet ist.

9. Batteriepack nach Anspruch 8, wobei das Wärmeisolationselement ein elastisches Material umfasst.

10. Batteriepack nach Anspruch 1, wobei das Verformungselement konfiguriert ist, um eine flache Form aufzuweisen.

11. Batteriepack nach Anspruch 1, wobei das Kühlmittel aus einer Gruppe ausgewählt ist, die aus Ethanol, Methanol und Wasser besteht.

12. Vorrichtung, die den Batteriepack nach einem der Ansprüche 1 bis 11 als Energiequelle umfasst.

## Revendications

1. Pack de batteries comprenant :
un empilement de cellules de batterie (100) comprenant une pluralité de cellules de batterie (110) ;
un élément de refroidissement (200) configuré pour refroidir l'empilement de cellules de batterie ;
un élément de déformation (300) configuré pour évacuer la chaleur de la pluralité de cellules de batterie vers l'élément de refroidissement ;
et
un boîtier de pack (400) configuré pour recevoir l'empilement de cellules de batterie, l'élément de refroidissement et l'élément de déformation en son sein,
dans lequel l'élément de déformation comprend une pluralité de premiers éléments de déformation (310) interposés entre la pluralité de cellules de batterie, et
dans lequel l'élément de déformation comprend un second élément de déformation (320) disposé entre l'empilement de cellules de batterie et l'élément de refroidissement,
dans lequel chacun de la pluralité des premiers éléments de déformation comprend un agent de refroidissement (313) en son sein, l'agent de refroidissement étant configuré pour être condensé dans une partie inférieure de l'intérieur du premier élément de déformation en raison du contact avec le second élément de déformation et étant configuré pour être évaporé dans une partie supérieure de l'intérieur du premier élément de déformation,
dans lequel, lorsque la température de l'élément de déformation atteint un point d'ébullition de l'agent de refroidissement ou plus, l'élément de déformation est déformé de telle sorte qu'un volume de l'élément de déformation se dilate, et
dans lequel, lorsque la totalité de l'agent de refroidissement passe dans une phase gazeuse, le transfert de chaleur de la pluralité de cellules de batterie vers l'élément de refroidissement est bloqué.

2. Pack de batteries selon la revendication 1, dans lequel l'élément de déformation est dans un état de vide dans lequel une partie restante de l'élément de déformation, à l'exclusion de l'agent de refroidissement qui y est inclus, est un espace vide.

3. Pack de batteries selon la revendication 1, dans lequel:
l'agent de refroidissement subit une transition de phase et est évaporé par la chaleur de la cellule de batterie et condensé par l'élément de refroidissement, et
le transfert de chaleur de la pluralité de cellules de batterie à l'élément de refroidissement se produit par la transition de phase de l'agent de refroidissement.

4. Pack de batteries selon la revendication 1, dans lequel un boîtier de l'élément de déformation est fait d'un alliage à mémoire de forme.

5. Pack de batteries selon la revendication 1, dans lequel l'agent de refroidissement subit une transition de phase entre l'évaporation et la condensation en fonction de la température de chacune de la pluralité de cellules de batterie.

6. Pack de batteries selon la revendication 4, dans lequel:
le boîtier comprend une première surface (311) et une seconde surface (312), chacune étant configurée pour faire face à la cellule de batterie ou à l'élément de refroidissement,
chacune de la première surface et de la seconde surface est plate à une température inférieure à une température de déformation de l'alliage à mémoire de forme, et
chacune de la première surface et de la seconde surface est déformée en une forme incurvée à une température supérieure à la température de déformation.

7. Pack de batteries selon la revendication 6, dans lequel le transfert de chaleur de la pluralité de cellules de batterie à l'élément de refroidissement est bloqué lorsque la totalité de l'agent de refroidissement dans l'élément de déformation est évaporée dans un état gazeux à la suite de l'expansion et de la déformation de chacune de la première surface et de la seconde surface en la forme incurvée.

8. Pack de batteries selon la revendication 1, dans lequel le premier élément de déformation ou un élément d'isolation thermique (330) est disposé entre la pluralité de cellules de batterie.

9. Pack de batteries selon la revendication 8, dans lequel l'élément d'isolation thermique comprend un matériau élastique.

10. Pack de batteries selon la revendication 1, dans lequel l'élément de déformation est configuré pour avoir une forme plate.

11. Pack de batteries selon la revendication 1, dans lequel l'agent de refroidissement est choisi dans un groupe constitué de l'éthanol, du méthanol et de l'eau.

12. Dispositif comprenant le pack de batteries selon l'une quelconque des revendications 1 à 11 en tant que source d'énergie.
